(19)

Europäisches
Patentamt
European
Patent Office
Office européen
des brevets

(11) **EP 3 243 866 A1**

(12) **EUROPEAN PATENT APPLICATION**

(43) Date of publication:
**15.11.2017 Bulletin 2017/46**

(21) Application number: **17172780.3**

(22) Date of filing: **22.01.2015**

(51) Int Cl.:
*C08J 9/14* (2006.01)      *C08L 61/10* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.01.2014 JP 2014011409**

(62) Document number(s) of the earlier application(s) in
accordance with Art. 76 EPC:
**15739865.2 / 3 098 255**

(71) Applicant: **Asahi Kasei Construction Materials
Corporation
Tokyo 101-8101 (JP)**

(72) Inventors:
• **Hamajima, Masato
Tokyo, 101-8101 (JP)**

• **Mukaiyama, Shigemi
Tokyo, 101-8101 (JP)**
• **Fukasawa, Yoshihito
Tokyo, 101-8101 (JP)**
• **Kumada, Atsushi
Tokyo, 101-8101 (JP)**

(74) Representative: **Strehl Schübel-Hopf & Partner
Maximilianstrasse 54
80538 München (DE)**

Remarks:
This application was filed on 24-05-2017 as a
divisional application to the application mentioned
under INID code 62.

(54) **PHENOL RESIN FOAM BODY AND METHOD FOR PRODUCING SAME**

(57)    There is disclosed a phenol resin foam which contains a phenol resin and a foaming agent comprising at least one of a chlorinated hydrofluoroolefin and a non-chlorinated hydrofluoroolefin. With respect to the phenol resin foam, its density is 10 kg/m³ or more and 150 kg/m³ or less, its thermal conductivity under a 10°C environment is 0.0175 W/m·k or less, and its thermal conductivity under a 23°C environment is 0.0185 W/m·k or less.

EP 3 243 866 A1

## Description

## Technical Field

The present invention relates to a phenol resin foam and a method of producing the same.

## Background Art

High airtightness and high thermal insulation of residential houses have been required in recent years due to enhanced energy-saving consciousness, obligation to comply with the next-generation energy saving standard and the like. With such enhancement in heat insulation performance of residential houses, it is expected that the necessary thickness of thermal-insulating materials is increased. Because of oppression to the interior living space and the limited space inside wall bodies, a problem of necessity for changes in the design due to increases in the thickness of thermal-insulating materials has been caused. Moreover, the thermal-insulating material is constructed inside the wall body, and thus, its replacement by new ones during habitation is very difficult. Accordingly, it is required that the thermal insulation performance be maintained for a long period.

As thermal-insulating materials for residential house applications, fiber thermal-insulating materials, such as glass wool and rock wool, or foamed plastic thermal-insulating materials formed by foaming styrene, urethane, or phenol resins are used. Of these, as for the foamed plastic thermal-insulating material, it is known that its thermal insulation performance is greatly influenced by the type and condition of a foaming agent included in its cells.

Chlorofluorocarbons (CFCs), of which the thermal conductivity is low, had been conventionally used as a foaming agent used for products of foamed plastic thermal-insulating materials, but abolition of the use of CFCs was specified by the Montreal Protocol, adopted in 1987, because CFCs are significantly responsible for destruction of the ozone layer and climate change. As a result, a shift of the foaming agent to hydrofluorocarbons (HFCs), of which the ozone depletion coefficient and the global warming coefficient are relatively low, has progressed. However, since HFCs still have a high global warming coefficient, a shift to hydrocarbon forming agents has been promoted.

Hydrocarbon foaming agents, of which the ozone depletion coefficient and the global warming coefficient are low, are excellent foaming agents from the viewpoint of environmental preservation. However, hydrocarbon foaming agents are flammable. In case of using such foaming agents, a manufacturing facility has to be explosion-proof and thus tends to be extremely expensive. Also, a flammable hydrocarbon foaming agent included in cells in a thermal-insulating material increases the flammability of the foamed plastic thermal-insulating material. In particular, as for a thermal-insulating material of which the oxygen index of 26% by volume or less, which is a designated combustible, there is a problem of imposition of limitations on its storage place and preservation method. Furthermore, in the case where a fire breaks out in a building in which the aforementioned thermal-insulating material has been constructed, there has been an issue of acceleration of the fire spread rate by the thermal-insulating material.

In Patent Literatures 1, 2, 3, 4, and 5, many gas species are disclosed as chlorinated or non-chlorinated hydrofluoroolefins, of which the ozone depletion coefficient is substantially zero, of which the global warming coefficient is low, and which are flame-retardant.

Citation List

## Patent Literature

Patent Literature 1 Japanese Unexamined Patent Publication No. 2008-546892
Patent Literature 2 Japanese Unexamined Patent Publication No. 2013-64139
Patent Literature 3 Japanese Unexamined Patent Publication No. 2010-522819
Patent Literature 4 Japanese Unexamined Patent Publication No. 2009-513812
Patent Literature 5 Japanese Unexamined Patent Publication No. 2011-504538

## Summary of Invention

## Technical Problem

In Patent Literatures 1, 2, 3, 4, and 5, a large number of chlorinated or non-chlorinated hydrofluoroolefins are disclosed. Of these, 1-chloro-3,3,3-trifluoropropene, 1,3,3,3-tetrafluoro-1-propene, 2,3,3,3-tetrafluoro-1-propene, and 1,1,1,4,4,4-hexafluoro-2-butene are characterized in that their ozone depletion coefficient and global warming coefficient are low and also, that they have flame retardancy. However, in the above literatures, only specific examples in which these are employed in easily combustible polystyrene and polyurethane resin foams are described, and it cannot be said that the flame retardancy of chlorinated or non-chlorinated hydrofluoroolefins are sufficiently exerted.

Meanwhile, as for a phenol resin foam, a phenol resin itself has flame retardancy, but in the case where a flammable hydrocarbon foaming agent is used, it is concerned that the flame retardancy is inhibited and the flame retardancy is not sufficiently exerted.

Here, the aforementioned chlorinated or non-chlorinated hydrofluoroolefins are not optimized for phenol resin foam applications. As for 1-Chloro-3,3,3-trifluoropropene, 1,3,3,3-tetrafluoro-1-propene, 2,3,3,3-tetrafluoro-1-propene, and 1,1,1,4,4,4-hexafluoro-2-butene, it is concerned that the closed cell ratio is reduced because their affinity for a phenol resin is high, and that the change over time in the thermal conductivity due to long-period use increases because the diffusion rate of the foaming agent to the outside the foam increases.

It is an object of the present invention to provide a phenol resin foam that is excellent in flame retardancy while suppressing environmental loads and is capable of maintaining excellent thermal insulation performance for a long period, and a method for producing the foam.

**Solution to Problem**

The present inventors have extensively studied to achieve the aforementioned object to find that a phenol resin foam that is excellent in flame retardancy while suppressing environmental loads and is capable of maintaining excellent thermal insulation performance for a long period can be obtained by using a chlorinated or a non-chlorinated hydrofluoroolefin as a foaming agent and to find a method for producing the phenol resin foam, thereby having completed the present invention. That is, the present invention relates to the following:

[1] A phenol resin foam comprising a phenol resin, and a foaming agent comprising at least either one of a chlorinated hydrofluoroolefin or a non-chlorinated hydrofluoroolefin,

having a density of 10 $kg/m^3$ or more and 150 $kg/m^3$ or less,
having a thermal conductivity under a 10°C environment of 0.0175 W/m·k or less, and
having a thermal conductivity under a 23°C environment of 0.0185 W/m·k or less.

[2] The phenol resin foam according to [1], having an oxygen index of 28% by volume or more.

[3] The phenol resin foam according to [1] or [2], having a thermal conductivity under a 10°C environment of 0.0185 W/m·k or less after being left to stand in a 110°C atmosphere for 14 days.

[4] The phenol resin foam according to any one of [1] to [3], having a closed cell ratio of 90% or more, an average cell diameter of 50 $\mu$m or more and 200 $\mu$m or less, and a void area ratio of 0.2% or less.

[5] The phenol resin foam according to any one of [1] to [4], wherein the foaming agent comprises at least one olefin selected from the group consisting of 1-chloro-3,3,3-trifluoropropene, 1,3,3,3-tetrafluoro-1-propene, 2,3,3,3-tetrafluoro-1-propene, and 1,1,1,4,4,4-hexafluoro-2-butene.

[6] A method for producing a phenol resin foam comprising a step of foaming and curing a foamable phenol resin composition containing a phenol resin, a surfactant, a curing catalyst, and a foaming agent on a face material,

wherein the foaming agent comprises at least either one of a chlorinated hydrofluoroolefin or a non-chlorinated hydrofluoroolefin,
a weight average molecular weight Mw of the phenol resin is 400 or more and 3000 or less, a ratio of the weight average molecular weight Mw to a number average molecule weight Mn of the phenol resin, Mw/Mn, is 1.5 or more and 6.0 or less, and the weight average molecular weight Mw and the number average molecule weight Mn are values determined by gel permeation chromatography.

[7] The method according to [6], wherein the foamable phenol resin composition is a mixture containing a phenol resin raw material comprising the phenol resin and water, the surfactant, the curing catalyst, and the foaming agent, and a water content of the phenol resin raw material is 1% by mass or more and 20% by mass or less based on the mass of the phenol resin material.

**Advantageous Effects of Invention**

According to the present invention, it is possible to provide a phenol resin foam that is excellent in flame retardancy and additionally is capable of maintaining excellent thermal insulation performance for a long period while using a foaming agent of which the ozone depletion coefficient and the global warming coefficient are extremely low, and a method for producing the foam.

**Description of Embodiments**

An embodiment to implement the present invention (referred to as "the present embodiment" hereinbelow) will be described hereinbelow in detail. The present invention is not limited to the following embodiment.
The phenol resin foam of the present embodiment contains a cured phenol resin and a foaming agent comprising at least one of a chlorinated hydrofluoroolefin (hydrochlorofluoroolefin) or a non-chlorinated hydrofluoroolefin (hydrofluoroolefin).
As the chlorinated or non-chlorinated hydrofluoroolefin, at least one olefin selected from the group of consisting of 1-chloro-3,3,3-trifluoropropene, 1,3,3,3-tetrafluoro-1-propene, 2,3,3,3-tetrafluoro-1-propene, and 1,1,1,4,4,4-hexafluoro-2-butene is preferable. The foaming agent in the phenol resin foam can contain at least one chlorinated or non-chlorinated hydrofluoroolefin, and may contain two or more chlorinated or non-chlorinated hydrofluoroolefins.
The density of the phenol resin foam in the present embodiment is 10 $kg/m^3$ or more and 150 $kg/m^3$ or less, preferably 15 $kg/m^3$ or more and 70 $kg/m^3$ or less, more preferably 15 $kg/m^3$ or more and 40 $kg/m^3$ or less, still more preferably 20 $kg/m^3$ or more and 35 $kg/m^3$ or less, and most preferably 20 $kg/m^3$ or more and 28 $kg/m^3$ or less. When the density is less than 10 $kg/m^3$, the strength is weak, and the foam is likely to be broken on transportation or construction. Also, when the density is low, cell membranes tend to be thinner. When cell membranes are thin, the foaming agent in the foam is likely to be replaced with air, and the cell membranes are likely to be broken on foaming. Thus, it becomes difficult to achieve a highly closed cell structure, and the long-term thermal insulation performance tends to be reduced. In contrast, when the density is higher than 150 $kg/m^3$, the thermal conductivity of solids derived from solid components such as phenol resin increases, and thus, the thermal insulation performance tends to be reduced.
The thermal conductivity of the phenol resin foam in the present embodiment measured under a 10°C environment is 0.0175 W/m·k or less, preferably 0.0170 W/m·k or less, more preferably 0.0165 W/m·k or less. The lower limit of the thermal conductivity of the phenol resin foam measured under a 10°C environment is not particularly limited, and usually around 0.014 W/m·k.
The thermal conductivity of the phenol resin foam in the present embodiment measured under a 23°C environment is 0.0185 W/m·k or less, preferably 0.0180 W/m·k or less, more preferably 0.0175 W/m·k or less. The lower limit of the thermal conductivity of the phenol resin foam measured under a 23°C environment is not particularly limited, and usually around 0.015 W/m·k. The method for measuring the thermal conductivity will be specifically described in Examples described below.
The oxygen index of the phenol resin foam in the present embodiment is preferably 28% by volume or more, more preferably 29% by volume or more, still more preferably 32% by volume or more, particularly preferably 34% by volume or more, and most preferably 35% by volume or more. With the oxygen index less than 28% by volume, in the case where a fire breaks out in a building in which a thermal-insulating material comprising a foam has been constructed, there is a possibility of acceleration of the fire spread rate due to the thermal-insulating material. Accordingly, areas in which the thermal insulating material can be constructed may be limited. Also, in the case where a composite board of a foam and an easily combustible member is formed, the composite board may fall within designated combustibles of which the oxygen index is 26% by volume or less, and there is also a concern of imposition of limitations on its storage places and preservation methods.
The thermal conductivity of the phenol resin foam under a 10°C environment after being left to stand in a 110°C atmosphere for 14 days is preferably 0.0185 W/m·k or less, more preferably 0.0180 W/m·k or less, still more preferably 0.0175 m·k or less. The lower limit of the thermal conductivity is not particularly limited, and usually around 0.016 W/m·k.
The closed cell ratio of the phenol resin foam in the present embodiment is preferably 90% or more, more preferably 95% or more, particularly preferably 97% or more and 100% or less. When the closed cell ratio is excessively low, the foaming agent included in the foam is likely to be replaced with air. Accordingly, since the thermal conductivity after a long period has passed tends to increase, and the cell membranes are likely to be broken, the compression strength tends to be reduced.
The average cell diameter of the phenol resin foam in the present embodiment is preferably 50 μm or more and 200 μm or less, more preferably 50 μm or more and 150 μm, still more preferably 60 μm or more and 110 μm, particularly preferably 60 μm or more and 90 μm. When the average cell diameter is excessively large, gas convection in the cells and heat insulation by the cell membranes become reduced, and thus, the initial thermal insulation performance tends to be reduced. When the average cell diameter is excessively small, each cell membrane becomes thinner, and thus, the compression strength tends to be reduced.
In the phenol resin foam of the present embodiment, large-diameter pores called voids may exist partially. It is believed that a void is usually formed due to coalescence of cells, inhomogeneous vaporization of the foaming agent, or gel derived from a high-molecular-weight component or foreign matters in the resin and the like. Herein, the void is defined as follows. That is, a phenol resin foam is cut such that a flat plane is cut out. When the area of gap portions present on the flat plane cut out (cross-sectional plane) is measured, a gap portion having an area of 2 mm$^2$ or more is defined as a void. When the phenol resin foam is a plate, it is possible to cut out a transverse-sectional plane in parallel with the upper and lower surfaces (a plane orthogonal to the thickness direction) from, for example, the center portion in the foaming direction (thickness direction) to thereby measure the area of the gap portion.

The void area ratio of the phenol resin foam is the proportion of the void area in the cross-sectional plane to the area of the cross section of the phenol resin foam. When this void area ratio is excessively large, there is a tendency for the initial thermal insulation performance to be reduced, and also, there is a tendency for the long-term performance of thermal insulation performance to be reduced. Moreover, there is a possibility of occurrence of structural defects from the void as the starting point to thereby lead to relative reduction in the compression strength. As the void area ratio of the phenol resin foam in the present embodiment, 0.2% or less is preferable, 0.1% or less is more preferable, 0.08% or less is still more preferable, 0.05% or less is particularly preferable.

It is possible to obtain the phenol resin foam of the present embodiment by foaming and curing a foamable phenol resin composition containing a phenol resin raw material comprising a phenol resin, a surfactant, a curing catalyst for the phenol resin, and a foaming agent. A gap portion in the foam is formed mainly by a vaporized foaming agent.

The foaming agent in the phenol resin foam of the present embodiment comprises at least either one of a chlorinated hydrofluoroolefin or a non-chlorinated hydrofluoroolefin.

In the present embodiment, the total content of the chlorinated or non-chlorinated hydrofluoroolefin comprised in the foaming agent is preferably 30% by mass or more, more preferably 50% by mass or more, still more preferably 60% by mass or more, especially preferably 70% by mass or more, particularly preferably 80% by mass or more and 100% by mass or less based on the total mass of the foaming agent. When the content of the chlorinated or non-chlorinated hydrofluoroolefin comprised in the foaming agent is less than 30% by mass, the thermal insulation performance and flame retardancy tend to be reduced.

In the present embodiment, the foaming agent may comprise a compound other than the above chlorinated or non-chlorinated hydrofluoroolefin. For example, a cyclic or chain alkane, alkene, or alkyne of 3 to 7 carbon atoms can be used as a foaming agent. Specifically, compounds such as normal-butane, isobutane, cyclobutane, normal-pentane, isopentane, cyclopentane, neopentane, normal-hexane, isohexane, 2,2-dimethylbutane, 2,3-dimethylbutane, and cyclohexane may fall within the foaming agent. Of these, a compound selected from pentanes such as normal-pentane, isopentane, cyclopentane, neopentane, and butanes such as normal-butane, isobutane, and cyclobutane is suitably used.

The amount of the foaming agent added in the phenol resin foam of the present embodiment is preferably 3.0 parts by mass to 25.0 parts by mass, more preferably 5.0 parts by mass to 22.5 parts by mass, still more preferably 6.5 parts by mass to 22.5 parts by mass, particularly preferably 7.5 parts by mass to 21.5 parts by mass based on 100 parts by mass of the total amount of the phenol resin (or the phenol resin raw material) and the surfactant. When the content of the foaming agent is less than 3.0 parts by mass, it becomes extremely difficult to achieve a required expansion ratio, and high density foam tends to be formed. When the content of the foaming agent exceeds 25.0 parts by mass, due to the plasticizing effect of the foaming agent, the viscosity of the phenol resin composition is reduced and excess foaming occurs. Then, cells in the foam are broken, and the closed cell ratio tends to be reduced. When the closed cell ratio is reduced, the physical properties such as long-term thermal insulation performance and compression strength tend to be reduced. It is possible to particularly easily form the a phenol resin foam having a density of 10 kg/m$^3$ or more and 150 kg/m$^3$ or less while using a foaming agent comprising a chlorinated or non-chlorinated hydrofluoroolefin by setting the amount of the foaming agent added within the above numerical range based on the total content of the phenol resin (or phenol resin raw material) and the surfactant.

It is possible to produce the phenol resin foam of the present embodiment, for example, by a method including a step of foaming and curing a foamable phenol resin composition containing a phenol resin raw material comprising a phenol resin, a surfactant, a curing catalyst, and a foaming agent on a face material. The foaming agent comprises at least one chlorinated or non-chlorinated hydrofluoroolefin. The weight average molecular weight Mw of the phenol resin determined by gel permeation chromatography is 400 or more and 3000 or less. The ratio of the weight average molecular weight Mw to a number average molecule weight Mn of the phenol resin, Mw/Mn, is 1.5 or more and 6.0 or less. The water content of the phenol resin raw material is 1% by mass or more and 20% by mass or less.

The phenol resin raw material comprises a phenol resin as the main component, water, and optionally other components. The phenol resin raw material immediately after synthesis of the phenol resin comprises an excess of water. Thus, the phenol resin raw material, after dehydrated to a predetermined water content, can be used for preparation of a foamable phenol resin composition. The water content of the phenol resin raw material is preferably 1% by mass or more and 20% by mass or less, more preferably 1% by mass or more and 15% by mass or less, still more preferably 2% by mass or more and 10% by mass or less, still more preferably 3% by mass or more and 10% by mass or less, and most preferably 3% by mass or more and 8.5% by mass or less based on the mass of the phenol resin raw material. In the case where the water content of the phenol resin raw material is less than 1% by mass, the viscosity of the phenol resin raw material excessively increases, and thus, the facility needs to be scaled up so as to be high-pressure resistant. Moreover, since evaporative latent heat from the water cannot be fully exploited on foaming and curing of the phenol resin composition, the phenol resin composition abnormally generates heat and the closed cell ratio tends to be reduced. In contrast, when the water content of the phenol resin raw material is higher than 20% by mass, the closed cell ratio is reduced due to reduction in the viscosity of the phenol resin composition, and moreover, the residual water after foaming and curing increases. Thus, the thermal insulation performance tends to be reduced. Furthermore, enormous energy and time is required to dissipate the residual water by heating.

The phenol resin in the present embodiment is typically a condensation polymer of a phenol and formaldehyde. Such a phenol resin is obtained by heating, for example, phenol and formaldehyde as raw material with an alkali catalyst in the temperature range of 40 to 100°C to polymerize these.

The weight average molecular weight Mw of the phenol resin obtained by polymerization determined by gel permeation chromatography is usually 400 or more and 3000 or less, preferably 500 or more and 2500 or less, more preferably 700 or more and 2500 or less, still more preferably 1000 or more and 2000 or less, and most preferably 1500 or more and 2000 or less. When the weight average molecular weight Mw is less than 400, many addition reaction sites remains in the phenol nucleus, and thus, the amount of heat generated increases after the curing catalyst is mixed into the phenol resin. Therefore, the phenol resin composition plasticized with a chlorinated or non-chlorinated hydrofluoroolefin reaches a high temperature, and the viscosity is further reduced. As a result, breakage of cells is induced on foaming to thereby reduce the closed cell ratio. When the closed cell ratio is reduced, the compression strength is reduced, and the long-term performance of the thermal conductivity tends to be reduced. Moreover, when the viscosity of the phenol resin composition is reduced as aforementioned, coalescence of cells becomes likely to occur, and thus, a foam in which many voids exists and of which the average cell diameter is large is easily formed. When the weight average molecular weight Mw is more than 3000, the viscosity of the phenol resin raw material and the phenol resin composition excessively increases, and thus, a large amount of the foaming agent is required to achieve a required foaming ratio. With a large amount of the foaming agent, the thermal conductivity under a 10°C environment increases. The surface smoothness of the phenol resin foam also tends to be reduced. Furthermore, since the low-molecular-weight components in the phenol resin are decreased, the amount of heat generated on foaming and curing of the phenol resin composition is decreased, and there is a concern that the curing reaction dose not sufficiently progress and the compression strength is reduced. It is believed that the compression strength can be improved to some extent by a method of increasing the amount of an acidic curing catalyst added or a method of increasing the temperature and/or the volume of hot air supplied from outside, such as an oven. However, if the amount of the acidic curing catalyst added is increased, the pH of the resulting phenol resin foam is reduced, and it is concerned that metal in contact with the phenol resin foam may erode. To increase the temperature and/or the volume of hot air supplied from outside, it is necessary to scale up a heating facility such as an oven, and the cost for the facility increases. When the viscosity of the phenol resin composition excessively increases, it becomes necessary to add a plasticizer and the like to adjust the viscosity to a predetermined value. Then, reduction in the closed cell ratio and increase in the voids are likely to occur.

The ratio of the weight average molecular weight Mw to the number average molecule weight Mn, Mw/Mn (molecular weight distribution), of the phenol resin in the present embodiment, determined by gel permeation chromatography is 1.5 or more and 6.0 or less, preferably 2.0 or more and 5.5 or less, more preferably 2.2 or more and 5.0 or less, still more preferably from 2.7 or more and 4.5 or less, and most preferably 3.0 or more and 4.0 or less. When the molecular weight distribution is less than 1.5, breakage of cell membranes on foaming becomes likely to occur, and thus, the closed cell ratio is reduced. When the closed cell ratio is reduced, the compression strength is reduced, and additionally, the long-term performance of the thermal conductivity tends to be reduced. Moreover, since the low-molecular-weight components are decreased, the amount of heat generated on foaming and curing is reduced, and it becomes necessary to increase the temperature and/or the volume of hot air supplied from outside, such as an oven. Correspondingly, problems such as increases in the facility cost and operating cost may occur. When the molecular weight distribution is more than 6.0, a portion of the high-molecular-weight components in the phenol resin becomes likely to be gelled, and breakage of cells occurs on foaming from the gel as the starting point. Thus, the closed cell ratio is reduced, and moreover, occurrence of voids is induced. As a result, the compression strength is reduced, and additionally, the long-term performance of the thermal conductivity tends to be reduced. Furthermore, the inside the mixing and discharging facility for the phenol resin, the foaming agent, and the curing acid catalyst is contaminated by the above gelled component, and a problem of difficulty of long-period stable production occurs.

The viscosity of the phenol resin (or the phenol resin raw material) in the present embodiment at 40°C is preferably 5000 mPa·s or more and 100000 mPa·s or less. Also, from the viewpoint of increase in the closed cell ratio and reduction in the average cell diameter, the viscosity is more preferably 7000 mPa·s or more and 50000 mPa·s or less, particularly preferably 7000 mPa·s or more and 30000 mPa·s or less. When the viscosity of the phenol resin (or the phenol resin raw material) is excessively low, the cell nuclei in the foamable phenol resin composition coalesce, and thus, the cell diameter tends to become excessively large. Moreover, the cell membrane is easily broken by the foaming pressure, and thus, there is a tendency to result in deterioration of the closed cell ratio. When the viscosity of the phenol resin (or the phenol resin raw material) is excessively high, the foaming ratio becomes low, and thus, there is a tendency to fail to achieve a necessary foaming ratio.

The foamable phenol resin composition of the present embodiment may contain additives in addition to the components described hereinabove. In the case of adding urea, as generally known, urea may be added directly to the reaction solution at timing in the middle of the reaction or around the endpoint of the reaction of phenol resin. Alternatively, urea that has been methylolated with an alkali catalyst in advance may be mixed with the phenol resin. As additives other than urea, it is possible to use a phthalate ester and a glycol such as ethylene glycol and diethylene glycol commonly used as a plasticizer. An aliphatic hydrocarbons, an alicyclic hydrocarbon of a high boiling point, or a mixture thereof also may be used as the additives. It is desirable that the content of the additives be 0.5 parts by mass or more and 20 parts by mass or less based on 100 parts by mass of the phenol resin (or the phenol resin raw material). When these additives are excessively added, the viscosity of the phenol resin is significantly reduced, and breakage of cells is induced on foaming and curing. When the amount of the additives is excessively small, the significance of inclusion of the additives is decreased. Accordingly, the content of the additives is more preferably 1.0 part by mass or more and 10 parts by mass or less.

The present embodiment provides a phenol resin foam in which the flame retardancy of the phenol resin is sufficiently exploited by using at least one chlorinated or non-chlorinated hydrofluoroolefin as the foaming agent for the phenol resin, but the following flame retardants may be added to the phenol resin composition as required. The flame retardant may be selected from, for example, bromine compounds, such as tetrabromobisphenol A and decabromodiphenyl ether, phosphorus or phosphorus compounds, such as aromatic phosphoric esters, aromatic condensed phosphoric esters, halogenated phosphoric esters, and red phosphorus, ammonium polyphosphate, antimony compounds, such as antimony trioxide and antimony pentoxide, metal hydroxides, such as aluminum hydroxide and magnesium hydroxide, and carbonates, such as calcium carbonate and sodium carbonate.

As the surfactant, those commonly used for manufacturing phenol resin foams can be used, and among others, nonionic surfactants are effective. As the surfactant, it is preferable to contain at least one compound selected from polyoxyalkylenes (alkylene oxides), which are copolymers of ethylene oxide and propylene oxide, condensation products of an alkylene oxide and castor oil, condensation products of an alkylene oxide and an alkylphenol such as nonylphenol and dodecylphenol, polyoxyethylene alkyl ethers of 14-22 carbon atoms in the alkyl ether moiety, fatty acid esters such as polyoxyethylene fatty acid esters, silicone compounds such as polydimethylsiloxane, and polyalcohols. These compounds may be used singly or two or more of these may be used in combination. The amount of the surfactant is not particularly limited, but is preferably 0.3 to 10 parts by mass based on 100 parts by mass of the phenol resin (or the phenol resin raw material).

As the curing catalyst, acidic curing catalysts that can cure phenol resins may be used, but anhydrous acid curing catalysts are preferable. As the anhydrous acid curing catalyst, anhydrous phosphoric acid and anhydrous aryl sulfonic acids are preferable. Examples of the anhydrous aryl sulfonic acid include toluenesulfonic acid, xylenesulfonic acid, phenolsulfonic acid, substituted phenolsulfonic acids, xylenolsulfonic acid, substituted xylenolsulfonic acids, dodecylbenzenesulfonic acid, benzenesulfonic acid, and naphthalenesulfonic acid. These may be used singly, or two or more of these may be combined. Moreover, as the curing aid, resorcinol, cresol, saligenin (ortho-methylolphenol), para-methylolphenol, and the like may be added. In addition, these curing catalysts may be diluted with a solvent such as ethylene glycol and diethylene glycol. The amount of the curing catalyst is not particularly limited, but is preferably 3 to 30 parts by mass based on the total amount of 100 parts by mass of the phenol resin (or the phenol resin raw material) and the surfactant.

It is possible to obtain a foamable phenol resin composition by mixing the above phenol resin raw material, curing catalyst, foaming agent, and surfactant in the aforementioned proportion. It is possible to obtain a phenol resin foam by foaming and curing the obtained foamable phenol resin composition as described below.

It is possible to obtain the phenol resin foam by a continuous production mode including, for example, continuously discharging the aforementioned foamable phenol resin composition onto a running face material, covering a surface of the foamable phenol resin composition, opposite to the surface in contact with the face material, with other face material, and foaming and heat-curing the foamable phenol resin composition. Also, as other embodiment, it is possible to obtain the phenol resin foam by a batch production mode that includes pouring the aforementioned foamable phenol resin composition into a mold lined with a face material or a release agent and foaming and heat-curing the composition. It is also possible to slice the phenol resin foam obtained by the batch production method as required before use.

It is preferable that the face material sandwiching the above phenol resin foam be a sheet-like substrate and have flexibility for the purpose of preventing breakage of the face materials on production. Examples of the face material having flexibility include synthetic fiber non-woven fabrics, synthetic fiber woven fabrics, glass fiber paper, glass fiber woven fabrics, glass fiber non-woven fabrics, glass fiber mixed paper, paper, metal films, or combinations thereof. These face materials may contain a flame retardant in order to impart flame retardancy. The flame retardant can be selected from, for example, bromine compounds, such as tetrabromobisphenol A and decabromodiphenyl ether, phosphorus or phosphorus compounds, such as aromatic phosphoric esters, aromatic condensed phosphoric esters, halogenated phosphoric esters, and red phosphorus, antimony compounds, such as ammonium polyphosphate, antimony trioxide, and antimony pentoxide, metal hydroxides, such as aluminum hydroxide and magnesium hydroxide, and carbonates, such as calcium carbonate and sodium carbonate. These flame retardants may be kneaded in face material fiber, or may be added to a binder, such as acryl, polyvinyl alcohol, vinyl acetate, epoxy, and unsaturated polyester. Additionally, it is possible to surface-treat the face material with a water repellent, such as fluorine-resin, silicone-resin, wax-emulsion, paraffin, and acryl-resin paraffin wax-combined water repellents, or an asphalt waterproofing agent. These water repellents and waterproofing agents may be used singly, or may be applied together with the above flame retardant on the face material.

It is preferable that the gas permeability of the face material be high. As such face materials, synthetic fiber non-woven fabrics, glass fiber paper, glass fiber non-woven fabrics, paper, pre-perforated metal films and the like are suitably used. Among such face materials, a face material having a gas permeability such as an oxygen permeability measured in compliance with ASTMD3985-95 of 4.5 cm$^3$/24 h·m$^2$ or more is particularly preferable. In the case where a face material of which the gas permeability is low is used, it is not possible to fully dissipate the water generated when the phenol resin is cured, and the water is likely to remain in the foam. Thus, a foam of which the closed cell ratio is low and in which there are many voids are easily formed. As a result, it may become relatively difficult to maintain good thermal insulation performance over a long period. From the viewpoint of leaching of the foamable phenol resin composition on foaming to the face material and adhesion of the foamable phenol resin composition to the face material, in the case where a synthetic fiber non-woven fabric is used as the face material, the weight per unit area is preferably from 15 to 200 g/m$^2$, more preferably from 15 to 150 g/m$^2$, still more preferably from 15 to 100 g/m$^2$, particularly preferably from 15 to 80 g/m$^2$, and most preferably from 15 to 60 g/m$^2$. In the case where a glass fiber non-woven fabric is used, the weight per unit area is preferably from 30 to 600 g/m$^2$, more preferably from 30 to 500 g/m$^2$, still more preferably from 30 to 400 g/m$^2$, particularly preferably from 30 to 350 g/m$^2$, and most preferably from 30 to 300 g/m$^2$.

It is possible to allow the foam phenol resin composition sandwiched between the two face materials to be foamed between the two face materials. In order to cure this foamed phenol resin composition (foam), for example, it is possible to use a first oven and a second oven as follows.

In the first oven, foaming and curing of the phenol resin composition is carried out under a 60 to 110°C atmosphere. For the first oven, for example, an endless steel belt-type double conveyor or a slat-type double conveyor is used. In the first oven, it is possible to obtain a partially-cured foam by curing an uncured foam while molding the foam into a plate. The interior of the first oven may not be at a uniform temperature over its whole area and may be provided with a plurality of temperature zones.

It is preferable that the second oven be an oven that generates hot air from 70 to 120°C and post-cures the foam partially-cured with the first oven. Partially-cured foam boards may be stacked at a certain interval using spacers or trays. When the temperature in the second oven is excessively high, the pressure of the foaming agent inside cells of the foam becomes excessively high, and thus, there is a possibility of inducing breakage of the cells. When the temperature in the second oven is excessively low, there is a fear of taking an excessively long time to allow the reaction of the phenol resin to proceed. Accordingly, it is more preferable that the temperature in the second oven (hot air temperature) be from 80 to 110°C.

The method for foaming and curing the foamable phenol resin composition to obtain the phenol resin foam of the present embodiment is not limited to the aforementioned method.

As aforementioned, by the production method according to the present embodiment, it is possible to provide a phenol resin foam that is low in environmental loads, is excellent in flame retardancy, and furthermore, can maintain excellent thermal insulation performance for a long period.

Examples

Hereinbelow, the present invention will be described more specifically based on Examples and Comparative Examples. However, the present invention is not intended to be limited to the following Examples.

The compositions, structures, and properties of the phenol resins and phenol resin foams in Examples and Comparative Examples were measured and evaluated with respect to following items.

(1) Foam Density

The foam density of the phenol resin foam was measured in accordance with JIS-K-7222. A 20-cm square board cut from an obtained phenol resin foam was used as a specimen. A surface materials such as a face material and a siding material was removed from this specimen, the mass and apparent volume of the remaining foam specimen, and the foam density was determined from these values.

(2) Average Cell Diameter

The average cell diameter of the phenol resin foam was measured by the following method with reference to the method described in JIS-K-6402.

The substantial center of a phenol resin foam in the thickness direction was cut in parallel with the front and back surfaces, and a photograph of the cut cross section magnified by 50 times was taken. At any optional position on the obtained photograph, four straight lines of a length of 9 cm (corresponding to 1800 $\mu$m in the actual foam cross-sectional surface) were drawn, and an average value of the number of cells that each straight line crossed was determined. The average cell diameter is a value calculated by dividing 1800 $\mu$m by the average value of the number of cells on which each straight line crossed.

(3) Closed Cell Ratio

The closed cell ratio of the phenol resin foam was measured by the following method with reference to Method A in ASTM-D-2856-94 (1998).

An about 25-mm cubic test specimen was cut out from the center part in the thickness direction of the resin foam. When it was not possible to obtain a test specimen of which the uniform thickness is 25 mm due to the thin thickness of the foam, every surface of the about 25-mm cubic test specimen cut out was sliced by about 1 mm to thereby form a test specimen having a uniform thickness. The length of each side was measured with a caliper, and the apparent volume (V1: $cm^3$) was determined as well as the mass (W: four significant digits, g) of the test specimen was measured. Subsequently, a closed space volume (V2: $cm^3$) of the test specimen was measured with an air pycnometer (Tokyoscience Co, Ltd., trade name "MODEL 1000") in accordance with the method described in Method A in ASTM-D-2856. Also, the cell diameter (t: cm) was measured in accordance with the measurement method in (2) Average Cell Diameter aforementioned. The surface area (A: $cm^3$) of the test specimen was determined from the length of each side previously measured. The obtained t and A were substituted into the expression: VA = (A x t) / 1.14 to calculate the opening cell volume (VA: $cm^3$) of cut cells present on the test specimen surface. Additionally, the density of the solid phenol resin was assumed to be 1.3 g/ml, and the solid portion volume (VS:$cm^3$) constituting the cell walls contained in the test specmen was calculated by the expression VS = test specimen mass (W) / 1.3.

The closed cell ratio was calculated by the following expression (2):

$$\text{Closed cell ratio (\%)} = [(V2 - VS)/(V1 - VA - VS)] \times 100 \quad (2)$$

The closed cell ratio of the foam obtained under the same manufacture conditions were measured 6 times, and the average value was used as the representative value of the foam obtained under the manufacture conditions.

(4) Void Area Ratio

The substantial center of a phenol resin foam in the thickness direction was cut in parallel with the front and back surfaces, and a photograph or color copy of a 100 mm x 150 mm area of the cut cross section magnified to 200% was taken. In the photograph or copy drawing taken, each of the vertical and horizontal lengths corresponds to two times the actual dimension, and the area corresponds to four times the actual area. A transparent section paper was overlapped on the photograph or copy drawing, a large-diameter cell was selected, and the cross-sectional area of the cell was measured using grids in the section paper. A pore in which eight or more 1 mm x 1 mm squares existed in sequence was determined as a void. The void areas observed in the photograph or copy drawing were integrated, and the area fraction (void area ratio) was calculated from the integrated area of the void. Since the image was enlarged to 200%, eight squares correspond to an area of 2 $mm^2$ in the cross section of the actual foam. The void area ratio of the foam of the same manufacture conditions were measured 12 times, and the average value was used as the representative value of the foam obtained under the manufacture conditions.

(5) Initial Thermal Conductivity

The initial thermal conductivities of the phenol resin foam under 10°C and 23°C environments were measured by the following method in compliance with JIS A 1412-2: 1999.

The phenol resin foam was cut into a 600 mm square. The test specimen obtained by cutting was placed in an atmosphere at 23 $\pm$ 1°C and a humidity of 50 $\pm$ 2%, and the change in the mass over time was measured every 24 hours. The test specimen was conditioned until the change in the mass over 24 hours reached 0.2% by mass or less.

The conditioned test specimen, after the face material was peeled off without damaging the foam, was introduced into a measurement apparatus for thermal conductivity placed under the same environment.

Measurement of the thermal conductivity was conducted using a measurement apparatus of a single test specimen-symmetric configuration system (EKO Instruments, trade name "HC-074/600"). The thermal conductivity under the 10°C environment was measured under conditions of a lower temperature plate of 0°C and a higher temperature plate of 20°C, and the thermal conductivity under the 23°C environment was measured under conditions of a lower temperature plate of 13°C and a higher temperature plate of 33°C, respectively.

(6) Thermal Conductivity after Acceleration Test

The test specimen of which measurement of the initial thermal conductivity was finished was placed in a circulation oven of which the temperature was adjusted to 110°C for 14 days and subjected to acceleration test in accordance with EN 13166: 2012, Annex C, C. 4. 2. 2. After then, in accordance with EN 12429:1998, the test specimen was cured at $23 \pm 2°C$ and a relative humidity of $50 \pm 5\%$ and conditioned until the difference of weight measurements conducted at intervals of 24 hours reached 0.05% or less of the weight. Subsequently, in accordance with the measurement method of the aforementioned (5) Thermal Conductivity, measurement of thermal conductivity was conducted under the 10°C environment after acceleration test.

(7) Phenol Resin Raw Material Water Content

To dehydrated methanol (manufactured by Kanto Chemical Co., Ltd.) of which the water content was measured, the phenol resin raw material was dissolved in a range of 3% by mass to 7% by mass. The water content of the phenol resin raw material was determined by subtracting the water in the dehydrated methanol from the water content of the solution. The water content of the phenol resin raw material was calculated from the water content measured. The Karl-Fischer water meter (manufactured by Kyoto Electronics Manufacturing Co., Ltd., MKC-510) was used for the measurement. For the measurement of the water content, HYDRANAL-Composite 5K manufactured by Sigma-Aldrich was used as the Karl-Fischer reagent, and HAYASHI-Solvent CE dehydrated solvent manufactured by Hayashi Pure Chemical Inc., Ltd. (for ketone) for Karl-Fischer titration was used. For measurement of the titer of the Karl-Fischer reagent, AQUAMICRON standard water-methanol (water 2 mg) manufactured by Mitsubishi Chemical Corporation was used. The water content measurement was determined by Method 1, and the titer of the Karl-Fischer reagent was determined by Method 5, set in the apparatus. The ratio of the obtained water content to the mass of the phenol resin raw material was determined, and this ratio was used as the water content of the phenol resin raw material.

(8) Viscosity of Phenol Resin or Phenol Resin Raw Material

A rotation viscometer (manufactured by Toki Sangyo Co., Ltd., Type R-100, rotor part: 3° x R-14) was used, and the viscosity value after stabilized for 3 minutes at 40°C was used as the measurement value.

(9) Oxygen Index

The oxygen index of the phenol resin foam was determined by the following method in compliance with the measurement method C of JIS A 95115.13.3 (JIS K7201-2).

The test specimen type II (10 mm x 10 mm x 150 mm) defined in JIS K7201-2 was cut out from the center portion of the phenol resin foam in the thickness direction. When a face material was contained in the test specimen, a surface layer of 1 mm in thickness including the face material was removed. The cut out test specimen was aged in an atmosphere at 23°C and a relative humidity of 50% for 88 hours or more until immediately before subjected to the test. The test was conducted using an AC type candle combustion tester (manufactured by Toyo Seiki Seisaku-sho, Ltd.) to measure the oxygen index.

(10) Weight Average Molecular Weight Mw and Ratio of Weight Average Molecular Weight Mw to Number Average Molecular Weight Mn, Mw/Mn (Molecular Weight Distribution)

Gel permeation chromatography (GPC) measurement was conducted under the following conditions. The weight average molecular weight Mw and number average molecular weight Mn were determined by using the chromatogram obtained and the calibration curve obtained from the relationship between the elution time and the molecular weight of standard substances shown below (standard polystyrene, 2-hydroxybenzyl alcohol, and phenol). The molecular weight distribution Mw/Mn was also calculated from these values.
Pretreatment:

About 10 mg of a phenol resin was dissolved in 1 ml of N,N-dimethylformamide (manufactured by Wako Pure Chemical Industries, Ltd., for high performance liquid chromatography) and filtered through a 0.2 $\mu$m membrane filter. The filtrate was used as a measurement solution.

Measurement conditions:

Measurement apparatus: Shodex System 21 (manufactured by Showa Denko K. K.)
Column: Shodex Asahipak GF-310HQ (7.5 mm I. D. x 30 cm)
Eluent: a solution in which lithium bromide at a concentration of 0.1% by mass was dissolved in N,N-dimethylformamide (manufactured by Wako Pure Chemical Industries, Ltd., for high performance liquid chromatography) was used as an eluent.
Flow rate: 0.6 ml/minute
Detector: RI detector
Column temperature: 40°C
Standard substance: standard polystyrene (Shodex Standard SL-105 manufactured by Showa Denko K. K.), 2-hydroxybenzyl alcohol (a 99% product manufactured by Sigma-Aldrich Corporation), and phenol (special grade manufactured by KANTO CHEMICAL CO., INC.)

(11) Presence or Absence of Hydrofluoroolefin and Hydrochlorofluoroolefin in Foam

First, the retention time under the following GC/MS measurement conditions was determined using a standard gas of hydrofluoroolefin and hydrochlorofluoroolefin.

Subsequently, 10 g of a phenol resin foam specimen from which the face material was peeled off and a metal file were placed and sealed in a 10 L container (product name Tedlar Bag), into which 5 L of nitrogen was injected. The specimen was ground and finely pulverized using the file over the Tedlar Bag. Subsequently, the specimen, remaining the Tedlar Bag, was placed in a temperature controller in which the temperature was adjusted to 81 °C for 10 minutes. One hundred microliters of the gas generated in the Tedlar Bag was collected and analyzed under the GC/MS measurement conditions shown below. The type of hydrofluoroolefin and hydrochlorofluoroolefin was identified from the retention time determined in advance and the mass spectrum. From the analysis results of GC/MS, the presence or absence of hydrofluoroolefin and hydrochlorofluoroolefin was determined.

GC/MS measurement conditions

The GC/MS measurement was conducted as follows. As the gas chromatography, Agilent 7890 type manufactured by Agilent Technologies, Inc. was used, and as the column, InertCap 5 (inner diameter 0.25 mm, membrane thickness 5 $\mu$m, and length 30 m) manufactured by GL Sciences Inc. was used. As the carrier gas, helium was used, and the flow rate was set to 1.1 ml/minute. The temperature at the injection port was 150°C, the injection method was the split method (1:50), and the amount of the specimen injected was 100 $\mu$l. The column temperature was retained at -60°C for 5 minutes first, and then, raised at 50°C/minute to 150°C and retained for 2.8 minutes. For mass spectrometry, Q1000GC type manufactured by JEOL Ltd. was used. Mass spectrometry was conducted under conditions of ionization method: electron ionization method (70 eV), scan range: m/Z = 10 to 500, voltage: -1300 V, ion source temperature: 230°C, and interface temperature: 150°C.

(Synthesis of Phenol Resin Raw Material)

Phenol Resin A

To a reactor, 3500 kg of 52% by mass formaldehyde aqueous solution and 2743 kg of 99% by mass phenol were placed. The reaction solution in the reactor was stirred with a propeller rotating stirrer, and the temperature of the reaction solution was adjusted to 40°C with a temperature controller. Then, 50% by mass aqueous sodium hydroxide solution was added until the pH of the reaction solution reached 8.7. The reaction solution was raised to 85°C over 1.5 hours. Thereafter, at the phase where the Ostwald viscosity of the reaction solution reached 115 centistokes (= 115 x $10^{-6}$ m$^2$/s, a measured value at 25°C), the reaction solution was cooled, and 400 kg of urea was added. Thereafter, the reaction solution was cooled to 30°C, and 50% by mass p-toluenesulfonic acid monohydrate aqueous solution was added until the pH of the reaction solution reached 6.4. The reaction solution obtained was concentrated by a thin film evaporator to obtain Phenol resin raw material A containing a phenol resin. The water content of Phenol resin raw material A was 7.8% by mass, and the viscosity was 21000 mPa·s.

Phenol Resin Raw Material B

To a reactor, 3500 kg of 52% by mass formaldehyde aqueous solution and 2510 kg of 99% by mass phenol were placed. The reaction solution in the reactor was stirred with a propeller rotating stirrer, and the temperature of the reaction solution was adjusted to 40°C with a temperature controller. Then, 50% by mass aqueous sodium hydroxide solution was added until the pH of the reaction solution reached 8.7. The reaction solution was raised to 85°C over 1.5 hours. At the phase where the Ostwald viscosity of the reaction solution reached 30 centistokes (= 30 x $10^{-6}$ $m^2$/s, a measured value at 25°C), the reaction solution was cooled, and 400 kg of urea was added. Thereafter, the reaction liquid was cooled to 30°C, and 50% by mass p-toluenesulfonic acid monohydrate aqueous solution was added until the pH of the reaction liquid reached 6.4. The reaction solution obtained was concentrated by a thin film evaporator to obtain Phenol resin raw material B comprising a phenol resin. The water content of Phenol resin raw material B was 2.4%, and the viscosity was 8800 mPa·s.

Phenol Resins C to P

Phenol resin raw materials C to P were obtained by changing the amount of 52% by mass formaldehyde aqueous solution and 99% by mass phenol placed for Phenol resin raw material A, the Oswald viscosity of the phenol resin raw material at 25°C when cooling of the reaction solution was started, the amount of urea added, and the water content and viscosity of the phenol resin raw material after concentrated by a thin film evaporator. These and the characteristics of the phenol resin raw materials obtained are together shown in Table 1.

(Example 1)

Production of Phenol Resin Foam

Based on 100 parts by mass of Phenol resin raw material A, a composition containing 50% by mass of a block copolymer of ethylene oxide-propylene oxide and 50% by mass of polyoxyethylene dodecyl phenylether, as a surfactant, was mixed in a proportion of 3.0 parts by mass. Based on 100 parts by mass of the mixture of the surfactant and the phenol resin raw material, 11 parts by mass of 1-chloro-3,3,3-trifluoropropene as a foaming agent and 14 parts by mass of a mixture of 80% by mass of xylene sulfonic acid and 20% by mass of diethylene glycol as an acid curing catalyst were mixed with a mixing head of which the temperature was adjusted to 25°C. The final mixture, a foamable phenol resin composition was dispensed with tournament piping to be supplied on a moving face material.

A surface of the foamable phenol resin composition on the face material, opposite to the surface in contact with the face material, was covered with other face material to sandwich the foamable phenol resin composition with and between two sheets of the face material. In that state, the foamable phenol resin composition together with the face material was introduced to a slat-type double conveyor heated to 85°C to be cured during a retention time of 15 minutes. Thereafter, the phenol resin composition was post-cured by heating in a 110°C oven for 2 hours to obtain a plate-like phenol resin foam.

As the face material, glass fiber non-woven fabric ("DuraGlass Type DH70" manufactured by Johns-Manville Corporation, basis weight: 70 g/$m^2$) was used.

(Example 2)

A phenol resin foam was obtained in the same manner as in Example 1 except that the foaming agent was replaced with 1,3,3,3-tetrafluoro-1-propene and that 8 parts by mass of the foaming agent was added based on 100 parts by mass of the mixture of the surfactant and the phenol resin raw material.

(Example 3)

A phenol resin foam was obtained in the same manner as in Example 1 except that the foaming agent was replaced with 1,1,1,4,4,4-hexafluoro-2-butene and that 14 parts by mass of the foaming agent was added based on 100 parts by mass of the mixture with the phenol resin raw material into which the surfactant was mixed.

(Example 4)

A phenol resin foam was obtained in the same manner as in Example 1 except that the foaming agent was replaced with 2,3,3,3-tetrafluoro-1-propene and that 8 parts by mass of the foaming agent was added based on 100 parts by mass of the mixture with the phenol resin raw material into which the surfactant was mixed.

(Example 5)

A phenol resin foam was obtained in the same manner as in Example 1 except that the phenol resin raw material was replaced with Phenol resin raw material C and that 10 parts by mass of the foaming agent was added based on 100 parts by mass of the mixture with Phenol resin raw material C into which the surfactant was mixed.

(Example 6)

A phenol resin foam was obtained in the same manner as in Example 1 except that the foaming agent was replaced with a gas in which 90% of 1-chloro-3,3,3-trifluoropropene and 10% of cyclopentane are mixed in mol ratio and that the phenol resin raw material was replaced with Phenol resin raw material D.

(Example 7)

A phenol resin foam was obtained in the same manner as in Example 1 except that the foaming agent was replaced with 1,3,3,3-tetrafluoro-1-propene, that the phenol resin raw material was replaced with Phenol resin raw material E, and that 9 parts by mass of the foaming agent was added based on 100 parts by mass of the mixture with Phenol resin raw material E into which the surfactant was mixed.

(Example 8)

A phenol resin foam was obtained in the same manner as in Example 1 except that the phenol resin raw material was replaced with Phenol resin raw material F and that 12 parts by mass of the foaming agent was added based on 100 parts by mass of the mixture with Phenol resin raw material F into which the surfactant was mixed.

(Example 9)

A phenol resin foam was obtained in the same manner as in Example 1 except that the foaming agent was replaced with 1,3,3,3-tetrafluoro-1-propene, that the phenol resin raw material was replaced with Phenol resin raw material G, and that 8 parts by mass of the foaming agent was added based on 100 parts by mass of the mixture with Phenol resin raw material G into which the surfactant was mixed.

(Example 10)

A phenol resin foam was obtained in the same manner as in Example 1 except that the phenol resin raw material was replaced with Phenol resin raw material H.

(Example 11)

A phenol resin foam was obtained in the same manner as in Example 1 except that the foaming agent was replaced with a gas in which 50% of 1-chloro-3,3,3-trifluoropropene and 50% of cyclopentane were mixed in mol ratio, that the phenol resin raw material was replaced with Phenol resin raw material H, and that 10 parts by mass of the foaming agent was added based on 100 parts by mass of the mixture with Phenol resin raw material H into which the surfactant was mixed.

(Example 12)

A phenol resin foam was obtained in the same manner as in Example 1 except that the foaming agent was replaced with a gas in which 90% of 1,1,1,4,4,4-hexafluoro-2-butene and 10% of cyclopentane were mixed in mol ratio, that the phenol resin raw material was replaced with Phenol resin raw material I, and that 14 parts by mass of the foaming agent was added based on 100 parts by mass of the mixture with Phenol resin raw material I into which the surfactant was mixed.

(Example 13)

A phenol resin foam was obtained in the same manner as in Example 1 except that the phenol resin raw material was replaced with Phenol resin raw material J and that 10 parts by mass of the foaming agent was added based on 100 parts by mass of the mixture with Phenol resin raw material J into which the surfactant was mixed.

(Example 14)

A phenol resin foam was obtained in the same manner as in Example 1 except that the foaming agent was replaced with a gas in which 60% of 1-chloro-3,3,3-trifluoropropene and 40% of cyclopentane were mixed in mol ratio, that the phenol resin raw material was replaced with Phenol resin raw material K, and that 10 parts by mass of the foaming agent was added based on 100 parts by mass of the mixture with Phenol resin raw material K into which the surfactant was mixed.

(Example 15)

A phenol resin foam was obtained in the same manner as in Example 1 except that the foaming agent was replaced with a gas in which 85% of 1-chloro-3,3,3-trifluoropropene and 15% of isopentane were mixed in mol ratio, that the phenol resin raw material was replaced with Phenol resin raw material L, and that 10 parts by mass of the foaming agent was added based on 100 parts by mass of the mixture with Phenol resin raw material L into which the surfactant was mixed.

(Example 16)

A phenol resin foam was obtained in the same manner as in Example 1 except that 13 parts by mass of 1-chloro-3,3,3-trifluoropropene as the foaming agent was added based on 100 parts by mass of the mixture of the surfactant and phenol resin raw material. This foamable phenol resin composition was poured into an aluminum mold lined with a face material and having an inner dimension of 1000 mm in length, 1000 mm in width, and 1000 mm in thickness, and sealed. The perimeter and the top and bottom surfaces of the mold were fixed with clamps so as not to expand by foaming pressure. The composition in the mold was introduced into an oven heated to 85°C and cured for 60 minutes. Thereafter, the phenol resin foam was removed from the mold and heated in a 110°C oven for 2 hours to thereby obtain a block-like phenol resin foam. The face material used was the same as in Examples 1. The block-like phenol resin foam obtained was sliced from the center portion in the thickness direction into a thickness of 50 mm to obtain a plate-like foam.

(Example 17)

A plate-like phenol resin foam was obtained in the same manner as in Example 16 except that 13 parts by mass of a gas in which 85% of 1-chloro-3,3,3-trifluoropropene and 15% of isopentane were mixed in mol ratio as the foaming agent was added based on 100 parts by mass of the mixture of the surfactant and the phenol resin raw material.

(Example 18)

A plate-like phenol resin foam was obtained in the same manner as in Example 16 except that 14 parts by mass of a gas in which 90% of 1-chloro-3,3,3-trifluoropropene and 10% of cyclopentane were mixed in mol ratio as the foaming agent was added based on 100 parts by mass of the mixture of the surfactant and phenol resin raw material.

(Comparative Example 1)

A phenol resin foam was obtained in the same manner as in Example 1 except that the phenol resin raw material was replaced with Phenol resin raw material B.

(Comparative Example 2)

A phenol resin foam was obtained in the same manner as in Example 1 except that the foaming agent was replaced with isopentane and that 9 parts by mass of the foaming agent was added based on 100 parts by mass of the mixture with Phenol resin raw material A into which the surfactant was mixed.

(Comparative Example 3)

A phenol resin foam was obtained in the same manner as in Example 1 except that the foaming agent was replaced with 1,1,1,4,4,4-hexafluoro-2-butene, that the phenol resin raw material was replaced with Phenol resin raw material M, and that 14 parts by mass of the foaming agent was added based on 100 parts by mass of the mixture with Phenol resin raw material M into which the surfactant was mixed.

(Comparative Example 4)

A phenol resin foam was obtained in the same manner as in Example 1 except that the foaming agent was replaced with 1,1,1,4,4,4-hexafluoro-2-butene, that the phenol resin raw material was replaced with Phenol resin raw material N, and that 14 parts by mass of the foaming agent was added based on 100 parts by mass of the mixture with Phenol resin raw material N into which the surfactant was mixed.

(Comparative Example 5)

A phenol resin foam was obtained in the same manner as in Example 1 except that the phenol resin raw material was replaced with Phenol resin raw material O and that 13 parts by mass of the foaming agent was added based on 100 parts by mass of the mixture with Phenol resin raw material O into which the surfactant was mixed.

(Comparative Example 6)

A phenol resin foam was obtained in the same manner as in Example 1 except that the phenol resin raw material was replaced with Phenol resin raw material P and that 11 parts by mass of the foaming agent was added based on 100 parts by mass of the mixture with Phenol resin raw material P into which the surfactant was mixed.

[Table 1]

| Phenol resin raw material | A | B | C | D | E | F | G | H | I | J | K | L | M | N | O | P |
|---|---|---|---|---|---|---|---|---|---|---|---|---|---|---|---|---|
| Amount of 52% by mass formaldehyde aqueous solution placed (kg) | 3500 | 3500 | 3500 | 3500 | 3500 | 3333 | 3333 | 3333 | 3333 | 3333 | 3333 | 3667 | 3500 | 3500 | 3500 | 3833 |
| Amount of 99% by mass phenol placed (kg) | 2743 | 2743 | 2743 | 2743 | 2743 | 2743 | 2743 | 2743 | 2743 | 2743 | 2743 | 2743 | 2743 | 2743 | 2743 | 2743 |
| Ostwald viscosity (centistokes) of phenol resin raw material at 25°C when cooling of reaction solution is started | 115 | 24 | 32 | 103 | 336 | 301 | 301 | 193 | 193 | 41 | 41 | 173 | 115 | 32 | 421 | 43 |
| The amount of urea added (kg) | 400 | 400 | 400 | 400 | 400 | 390 | 390 | 390 | 390 | 390 | 390 | 429 | 400 | 400 | 400 | 455 |
| Water content of phenol resin raw material after concentrated (%) | 7.8 | 2.4 | 3.5 | 6.5 | 18.8 | 9.8 | 7.8 | 8.7 | 9.2 | 1.8 | 3.7 | 8.3 | 21.3 | 0.8 | 10.5 | 1.8 |
| Viscosity of phenol resin raw material after concentrated (mPa·s) | 21000 | 8800 | 9000 | 19000 | 4500 | 18000 | 34000 | 20000 | 12000 | 20000 | 10000 | 14000 | 2300 | 45000 | 24000 | 9300 |
| Weight average molecular weight of phenol resin raw material Mw | 1760 | 330 | 420 | 1300 | 2850 | 2500 | 2500 | 1800 | 1800 | 500 | 500 | 1650 | 1760 | 420 | 3500 | 550 |

(continued)

| Phenol resin raw material | A | B | C | D | E | F | G | H | I | J | K | L | M | N | O | P |
|---|---|---|---|---|---|---|---|---|---|---|---|---|---|---|---|---|
| Molecular weight distribution of phenol resin raw material Mw/Mn | 3.4 | 1.5 | 1.6 | 2.7 | 5.1 | 5.8 | 5.8 | 4.7 | 4.7 | 2 | 2 | 2.7 | 3.4 | 1.6 | 4.4 | 1.4 |

The properties and thermal conductivity evaluation results of the phenol resin foams obtained are shown in Tables 2 and 3.

[Table 2]

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|---|---|---|---|---|---|---|
| Foam thickness (mm) | 49.4 | 45.2 | 50.2 | 44.8 | 50.8 | 50.6 | 51.2 | 50.4 | 46.2 | 50.3 | 50.6 | 49.6 | 46.1 | 50.9 | 51.2 | 50.3 | 50.1 | 49.8 |
| Foam density (kg/m$^3$) | 27.6 | 30.1 | 27.4 | 30.5 | 26.8 | 27.3 | 26.4 | 27.3 | 29.3 | 27.6 | 27.8 | 27.0 | 29.1 | 27.8 | 26.5 | 28.7 | 29.6 | 28.1 |
| Closed cell ratio (%) | 95.2 | 90.8 | 94.8 | 90.4 | 91.3 | 94.9 | 90.3 | 94.2 | 91.2 | 93.8 | 94.3 | 93.1 | 91.6 | 92.1 | 91.4 | 91.3 | 90.3 | 91.6 |
| Average cell diameter ($\mu$m) | 103.0 | 133.1 | 108.6 | 138.3 | 116.3 | 105.6 | 128.6 | 108.3 | 138.2 | 109.3 | 112.2 | 108.7 | 119.3 | 118.4 | 117.7 | 118.6 | 153.6 | 146.3 |
| Void area proportion (%) | 0.04 | 0.09 | 0.06 | 0.11 | 0.06 | 0.03 | 0.05 | 0.05 | 0.12 | 0.05 | 0.06 | 0.05 | 0.07 | 0.04 | 0.05 | 0.09 | 0.13 | 0.10 |
| Initial thermal conductivity under a 10°C environment (W/mk) | 0.0162 | 0.0167 | 0.0165 | 0.0169 | 0.0167 | 0.0164 | 0.0168 | 0.0163 | 0.0170 | 0.0161 | 0.0174 | 0.0164 | 0.0170 | 0.0166 | 0.0163 | 0.0169 | 0.0170 | 0.0172 |
| Initial thermal conductivity under a 23°C environment (W/mk) | 0.0173 | 0.0181 | 0.0174 | 0.0184 | 0.0177 | 0.0174 | 0.0179 | 0.0172 | 0.0183 | 0.0170 | 0.0184 | 0.0175 | 0.0183 | 0.0181 | 0.0175 | 0.0178 | 0.0180 | 0.0179 |
| Thermal conductivity under a 10°C environment after acceleration test (W/mk) | 0.0175 | 0.0182 | 0.0176 | 0.0185 | 0.0184 | 0.0176 | 0.0184 | 0.0175 | 0.0185 | 0.0173 | 0.0185 | 0.0178 | 0.0184 | 0.0181 | 0.0179 | 0.0181 | 0.0183 | 0.0182 |

EP 3 243 866 A1

(continued)

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|---|---|---|---|---|---|---|
| Oxygen index (% by volume) | 32.8 | 31.2 | 32.1 | 31.4 | 32.0 | 30.4 | 32.6 | 32.8 | 31.6 | 32.9 | 29.2 | 31.1 | 31.9 | 29.7 | 30.2 | 31.9 | 30.4 | 30.8 |

[Table 3]

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Foam thickness (mm) | 50.1 | 55.3 | 50.4 | 48.9 | 50.9 | 48.9 |
| Foam density ($kg/m^3$) | 27.4 | 22.3 | 27.1 | 28.2 | 26.4 | 27.9 |
| Closed cell ratio (%) | 71.8 | 88.3 | 78.4 | 89.2 | 90.3 | 88.1 |
| Average cell diameter ($\mu$m) | 171.8 | 144.0 | 211.3 | 132.4 | 128.4 | 122.2 |
| Void area proportion (%) | 0.68 | 0.17 | 0.48 | 0.24 | 0.08 | 0.06 |
| Initial thermal conductivity under a 10°C environment (W/mk) | 0.0177 | 0.0214 | 0.0181 | 0.0176 | 0.0176 | 0.0177 |
| Initial thermal conductivity under a 23°C environment (W/mk) | 0.0189 | 0.0223 | 0.0191 | 0.0188 | 0.0181 | 0.0186 |
| Thermal conductivity under a 10°C environment after acceleration test (W/mk) | 0.0201 | 0.0237 | 0.0207 | 0.0192 | 0.0191 | 0.0194 |
| Oxygen index (% by volume) | 31.7 | 26.3 | 30.9 | 31.5 | 32.0 | 31.8 |

## Claims

1. A phenol resin foam comprising a phenol resin, and a foaming agent comprising at least either one of a chlorinated hydrofluoroolefin or a non-chlorinated hydrofluoroolefin,
having a density of 10 $kg/m^3$ or more and 150 $kg/m^3$ or less,
having a thermal conductivity under a 10°C environment of 0.0175 W/m·k or less, and
having a thermal conductivity under a 23°C environment of 0.0185 W/m·k or less,
provided the following phenol resin foams are excluded:

   phenol resin foams comprising a phenol resin, a hydrocarbon having 6 or less carbon atoms, and at least one halogenated hydroolefin selected from the group consisting of hydrofluoroolefins and hydrochlorofluoroolefins, and the phenol resin foam having a density of 10 $kg/m^3$ or more and 150 $kg/m^3$ or less, wherein a sum of a content of the hydrocarbon having 6 or less carbon atoms and a content of the halogenated hydroolefin is from 0.23 to 0.90 mol, a content of the hydrocarbon having 6 or less carbon atoms is from 0.03 to 0.85 mol, and a content of the halogenated hydroolefin is from 0.05 to 0.85 mol, per 22.4 x$10^{-3}$ $m^3$ of spatial volume in the phenol resin foam.

2. The phenol resin foam according to claim 1, having an oxygen index of 28% by volume or more.

3. The phenol resin foam according to claims 1 or 2, having a thermal conductivity under a 10°C environment of 0.0185 W/m·k or less after being left to stand in a 110°C atmosphere for 14 days.

4. The phenol resin foam according to any one of claims 1 to 3, having a closed cell ratio of 90% or more, an average cell diameter of 50 $\mu$m or more and 200 $\mu$m or less, and a void area ratio of 0.2% or less.

5. The phenol resin foam according to any one of claims 1 to 4, wherein the foaming agent comprises at least one olefin selected from the group consisting of 1-chloro-3,3,3-trifluoropropene, 1,3,3,3-tetrafluoro-1-propene, 2,3,3,3-tetrafluoro-1-propene, and 1,1,1,4,4,4-hexafluoro-2-butene.

6. A method of producing a phenol resin foam according to any one of claims 1 to 5, comprising a step of foaming and curing a foamable phenol resin composition containing a phenol resin, a surfactant, a curing catalyst, and a foaming agent on a face material,
wherein the foaming agent comprises at least either one of a chlorinated hydrofluoroolefin or a non-chlorinated hydrofluoroolefin,

a weight average molecular weight Mw of the phenol resin is 400 or more and 3000 or less,
a ratio of the weight average molecular weight Mw to a number average molecule weight Mn of the phenol resin, Mw/Mn, is 1.5 or more and 6.0 or less, and the weight average molecular weight Mw and the number average molecule weight Mn are values determined by gel permeation chromatography.

7. The method according to claim 6, wherein the foamable phenol resin composition is a mixture containing a phenol resin raw material comprising the phenol resin and water, the surfactant, the curing catalyst, and the foaming agent, and a water content of the phenol resin raw material is 1% by mass or more and 20% by mass or less based on the mass of the phenol resin material.

Europäisches
Patentamt

European
Patent Office

Office européen
des brevets

# EUROPEAN SEARCH REPORT

Application Number

EP 17 17 2780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 478 958 A (CARLSON JOHN D [US] ET AL) 23 October 1984 (1984-10-23) * column 3, line 20 - column 4, line 2 * * examples 1 - 4, 5, 6, 9 * ----- | 1-7 | INV. C08J9/14 C08L61/10 |

TECHNICAL FIELDS
SEARCHED (IPC)

C08J
C08L
C08G

The present search report has been drawn up for all claims

| Place of search | Date of completion of the search | Examiner |
|---|---|---|
| The Hague | 17 July 2017 | Lichau, Holger |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

.....................................................................................................
& : member of the same patent family, corresponding
      document

EPO FORM 1503 03.82 (P04C01)

**ANNEX TO THE EUROPEAN SEARCH REPORT
ON EUROPEAN PATENT APPLICATION NO.**

EP 17 17 2780

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2017

| Patent document cited in search report | | Publication date | Patent family member(s) | | Publication date |
|---|---|---|---|---|---|
| US 4478958 | A | 23-10-1984 | AT | 385277 B | 10-03-1988 |
| | | | AU | 540473 B2 | 22-11-1984 |
| | | | BE | 897255 A1 | 03-11-1983 |
| | | | CA | 1209747 A | 12-08-1986 |
| | | | CH | 662576 A5 | 15-10-1987 |
| | | | DE | 3324432 A1 | 17-01-1985 |
| | | | DK | 318183 A | 10-01-1984 |
| | | | ES | 8504875 A1 | 16-07-1985 |
| | | | FI | 79334 B | 31-08-1989 |
| | | | FR | 2529898 A1 | 13-01-1984 |
| | | | GB | 2125045 A | 29-02-1984 |
| | | | IT | 1171848 B | 10-06-1987 |
| | | | JP | S5962644 A | 10-04-1984 |
| | | | JP | S6365215 B2 | 15-12-1988 |
| | | | LU | 84907 A1 | 23-11-1983 |
| | | | NL | 8302443 A | 01-02-1984 |
| | | | NO | 832445 A | 10-01-1984 |
| | | | NZ | 204805 A | 08-08-1986 |
| | | | PT | 77006 A | 01-08-1983 |
| | | | SE | 459922 B | 21-08-1989 |
| | | | US | 4478958 A | 23-10-1984 |
| | | | ZA | 8304750 B | 28-03-1984 |

EPO FORM P0459

For more details about this annex : see Official Journal of the European Patent Office, No. 12/82

**EP 3 243 866 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008546892 A
- JP 2013064139 A
- JP 2010522819 A
- JP 2009513812 A
- JP 2011504538 A